# EUROPEAN PATENT APPLICATION

(11) **EP 1 837 167 A1**
(43) Date of publication of application: **26.09.2007**
(21) Application number: 07405092.3
(22) Date of filing: 20.03.2007
(51) Int. Cl.: B29D 11/00

(54) **Molding of an array of optical elements**

(30) Priority: 20.03.2006 US 384563
(71) Applicant: Heptagon Oy, 02150 Espoo (FI)
(72) Inventor: Rudmann, Hartmut, 8918 Unterlunkhofen (CH); Heimgartner, Stephan, 6004 Luzern (CH); Westenhöfer, Susanne, 8907 Wettswil (CH); Rossi, Markus, 8645 Jona (CH)
(74) Representative: Frei Patent Attorneys

(57) **Abstract**

A method of manufacturing a plurality of elements by replication, comprises the steps of
• providing a replication tool that comprises a plurality of replication sections having structural features defining the shape of the elements, the tool further comprising a plurality of first spacer portions;
• providing a substrate;
• applying a replication material 5 in individual portions, each portion being associated with one of the replication sections 3 and the portion being applied to the replication section 3 and/or to a location on the substrate 7 against which the replication section 3 will be moved in a later step;
• moving the tool against the substrate, with the replication material in a plastically deformable or viscous or liquid state located between the tool and the substrate; and
• hardening the replication material to form the elements.

## Description

### FIELD OF THE INVENTION

The invention is in the field of manufacturing optical elements, in particular refractive optical elements and/or diffractive micro-optical elements, by means of a replication process that includes embossing or moulding steps. More concretely, it deals with a method and a replication tool for manufacturing a plurality of elements as described in the preamble of the corresponding independent claims.

### BACKGROUND OF THE INVENTION

Replicated optical elements include diffractive and/or refractive micro-optical elements for influencing an optical beam in any pre-defined manner, refractive elements such as lenses, potentially at least partially reflecting elements etc..

When optical elements are produced by replication, there is often a basic configuration involving a substrate and replication material on a surface thereof, which replication material is shaped and hardened in the course of a replication process.

Of special interest are the wafer-scale fabrication processes, where an array of optical elements is fabricated on a disk-like ("wafer-") structure, which subsequently to replication is separated ("diced") into parts constituting the individual elements. 'Wafer scale' refers to the size of disk like or plate like substrates of sizes comparable to semiconductor wafers, such as disks having diameters between 2 inches and 12 inches.

In wafer-scale replication processes, a single blob of replication material for the replica is disposed on the substrate. However, in such process, depending on properties of the replication material, the aspect ratio of replicated structures in waver-scale replication is limited. If the structures to be replicated are not flat and have a high aspect ratio, it is difficult to make sure that all structures are duly filled by replication material. Also for structures with a limited aspect ratio, one has to dispense a large amount of replication material in order to make sure that also in peripheral regions enough replication material remains so that all structures are replicated. Often, it will happen that air gets trapped against the replication surface, i.e. in the mould. This causes defects in the finished replicated elements. In the case of optical elements, defective elements are rejected.

### DESCRIPTION OF THE INVENTION

It is an object of the invention to create a method, and a tool for manufacturing optical elements, which overcome the drawbacks of the prior art and which improve the quality of elements replicated in this manner, and reduce the occurrence of defects.

According to a first aspect of the invention, a method of manufacturing a plurality of elements by replication is provided, the method comprising the steps of
- providing a replication tool that comprises one or more replication sections having structural features defining the shape of the elements,;
- providing a substrate;
- applying a replication material in individual portions, each portion being associated with one of the replication sections and the portion being applied to the replication section and/or to a corresponding lateral location on the substrate against which the replication section will be moved in a later step;
- moving the tool against the substrate, with the replication material in a plastically deformable or viscous or-liquid-state located between the tool and the substrate, shaping the replication material according to the shape of the replication sections; and
- hardening the replication material to form the elements.

Thus, a predetermined volume of replication liquid is applied locally and individually to at least one of the tool or the substrate prior to pressing the tool against the substrate. This allows to provide a plurality of cavities with an optimal amount of replication liquid, reducing or eliminating the volume of surplus liquid that would have to be removed or diverted from the critical areas of the substrate when a plurality of elements was formed from a single blob of replication liquid.

After replication, the replication tool is removed, and the substrate with the replication material thereon may be separated ("diced") into parts each containing an individual element. The invention features the additional advantage that it is possible to confine the replication material on the individual elements, i.e. to have regions on the individual elements where the substrate is not covered by replication material.

The replication section of the tool defines a replication surface or section with (concave or convex) negative structural features, being a negative of at least some of the structural features of the element to be produced.

While the replication tool and the substrate are in the replication position - in which the replication tool and the substrate are brought together, for example the replication tool is placed on the substrate - the replication material is hardened. Depending on the replication material chosen, it may be hardened by curing, for example UV curing. As an alternative it may be hardened by cooling. Depending on the replication material chosen, other hardening methods are possible. Subsequently, the replication tool and the replication material are separated from each other. For most applications, the replication material remains on the substrate. The optical element typically is a refractive and/or diffractive optical element, but also may e.g. also have - a micromechanical function at least in regions.

The tool comprises a plurality of replication sections, i.e. cavities or protrusions, thus allowing for the simultaneous manufacturing of a plurality elements on a common substrate, which on the substrate are preferably arranged in an array-like manner. The tool comprises a plurality of replication sections, thus allowing for the simultaneous manufacturing of an array of elements on a common substrate. This common substrate may, according to a special embodiment, be part of an opto-electronic or micro-opto-electronic assembly comprising optical and electronic elements produced on a wafer scale and later diced into separate parts.

In a preferred embodiment of the invention, the portion of replication material is applied to the tool, namely to the replication section. Preferably, the replication section is filled, at least to a large part. Especially the critical locations of the replication section corresponding to the highest feature of the future element, which are most sensitive and prone to defects, are filled.

In a further preferred embodiment of the invention, the flow or dispersion of replication material across the tool is limited by the replication section being a convex part of the lower tool surface, i.e. convex features protruding from a surface of the tool. For example, the tool may be kept in this orientation, i.e. facing downwards, while being moved to and against the substrate. The substrate to which the replication material is applied in this manner (each convex part carrying a droplet of the replication material)
- may be flat and absent any particular structure of the flat surfaces, except, optionally, structures for alignment,
- may as an alternative optionally comprise concave receiving sections arranged opposite to the convex parts and being filled with replication material by moving the tool against the substrate; or
- may as an other option comprise flat, concave or irregularly structured receiving surface sections, with the tool applying the replication material droplets to these receiving surface sections. In this case, with the indices of refraction of the hardened replication material and the substrate are preferably of similar magnitude. Then the exact height and surface structure of the substrate has little or no optical influence, and the optical properties and location of the optical element being formed are defined by the location of the tool, which may be better to control than that of individual features or surfaces of the substrate.
   The receiving sections in both latter cases are arranged in a grid that is the mirror image of the grid defined by the convex replication sections on the tool.

In another preferred embodiment of the invention, the replication material is applied to the convex replication sections by dipping the replication sections into the surface of a volume of replication material. The volume may be a pool in a container, or an amount of replication material spread over a surface. The replication sections are preferably dipped only as far to wet only the replication sections, leaving the rest of the tool surface free from replication material. Alternatively, the rest of the tool surface may be non-wetting with respect to the replication material, such that, when removing the lower surface of the tool from the volume of replication material, it remains free from replication material. The convex replication sections may be treated chemically or mechanically, or may be made of another material, in order to have a better wetting property, causing a droplet of replication material to adhere to each of replication sections.

According to yet another embodiment, a dispensing tool is used for dispensing the replication material on the substrate and/or the replication tool. The dispensing tool, according to this embodiment is based on the above principle. The dispensing tool thus comprises a plurality of protruding replication material loading portions, which are arranged in an array corresponding to the array of replication sections of the replication tool. The replication material loading portions are dipped into the surface of a volume of replication material. The protruding portions are preferably dipped only as far to wet only portions themselves, leaving the rest of the tool surface free from replication material. Then, the dispensing tool is brought into contact with the surface of the replication tool or the substrate, so that amounts of replication material stick to the replication tool or substrate surface, respectively. Instead of or in addition to being protruding, replication material loading portions may be made of another material than the surrounding surface of the dispensing tool in order to have a better wetting property, causing a droplet of replication material to adhere to each of the replication material loading portions.

In this way, dispensing in individual portions is a fully parallel process.

In another preferred embodiment of the invention, the portion of replication material is applied to the substrate. The replication material forms a - usually convex-droplet isolated from other droplets of replication material.

Applying the replication material in individual portions may, depending on the material properties of the replication material, even provide an advantage when replicating structures with a high aspect ratio (deep cavities). When the tool with the replication section is moved against the droplet, the convex surface of the droplet reaches into the replication section, and starts displacing the air at the critical location, before the tool even touches the substrate. This is in contrast to the state of the art, where the entire surface of the substrate is covered with replication material, such that, when spacers surrounding the replication sections reach the replication material, the replication material may block air trapped in the replication section from escaping.

This approach can be combined with any variant of the previous approach, i.e. the replication material may be applied to both the tool and the substrate.

In a preferred variant of this embodiment, the flow or dispersion of replication material across the substrate is limited by flow limiting means on the substrate.

The flow limiting means may be constituted by an edge and/or an area of reduced wetting surrounding a material receiving area of the substrate. Such an area of reduced wetting is created by mechanical and/or chemical treatment of the surface of the substrate. Alternatively or in addition, such an area is created by an inlay of other material arrange in the surface of the substrate. The surface of the material receiving area may be treated as well, in order to increase its wetting capability.

According to another aspect of the invention, a method of manufacturing a plurality of optical elements is provided, each optical element comprising a refractive lens, the method comprising the steps of
- providing a replication tool that comprises a plurality of replication sections having negative structural features defining the shape of the elements, each replication section comprising a dome-shaped portion defining the shape of one of said refractive lenses,
- providing a substrate;
- dispensing a replication material in a liquid or viscous or plastically deformable state into each one of the dome-shaped portions,
- moving the replication tool and the substrate against each other until the replication material is in contact with a surface of the substrate;
- hardening the replication material to form the elements;
- removing the replication tool; and
- separating parts of the substrate each carrying at least one of said refractive lenses from each other.

Further, preferably, the replication tool may comprise spacer portions, for example as disclosed in WO 2004/068198 by the same applicant, herewith incorporated by reference in its entirety. The spacer portions allow for an automated and accurate thickness control of the deformable material on the substrate. They may comprise "leg like" structures built into the tool. In addition the spacers prevent the deformation of the micro optical topography since the spacers protrude further than the highest structural features on a tool.

The spacer portion is preferably available in a manner that it is 'distributed' over at least an essential fraction of the replication tool, for example over the entire replication tool or at the edge. This means that features of the spacer portion are present in an essential fraction of the replication tool, for example, the spacer portion consists of a plurality of spacers distributed over the replication surface of the replication tool. The spacers allow for an automated and accurate thickness control of the deformable material layer.

As an alternative or in addition to spacers abutting the substrate surface, the replication tool may also comprise "floating spacer", i.e. spacers that remain at a certain distance from the substrate surface during the replication process.

Floating spacers or contact spacers may for example surround a dome-shaped cavity that defines the shape of a refractive lens to be replicated.

The replica (for example a micro-optical element or micro-optical element component or an optical micro-system) may be made of epoxy, which is cured - for example UV cured - while the replication tool is still in place. UV light curing is a fast process that allows for a good control of the hardening process. Depending on the replication material used, also other hardening processes are possible, for example by cooling, chemical reaction, waiting, etc. For most applications, the replication material is transparent.

Further preferred embodiments are evident from the dependent patent claims. Features of the method claims may be combined with features of the device claims and vice versa.

### BRIEF DESCRIPTION OF THE DRAWINGS

The subject matter of the invention will be explained in more detail in the following text with reference to preferred exemplary embodiments, which are illustrated in the attached drawings, which schematically show:
- Figure 1: a cross section through a replication tool;
- Figure 2: an elevated view of a replication tool;
- Figures 3-6: cross sections through further tools and substrates in various production stages;
- Figures 7 -11: details of cross sections of substrates and tools;
- Figure 12: a cross section of a dispensing tool;Figure 13 a cross section of a further replication tool; and
- Figure 14: a flowchart showing method steps of the invention.

In principle, identical or corresponding parts are provided with the same reference symbols in the figures.

### DETAILED DESCRIPTION OF PREFERRED EMBODIMENTS

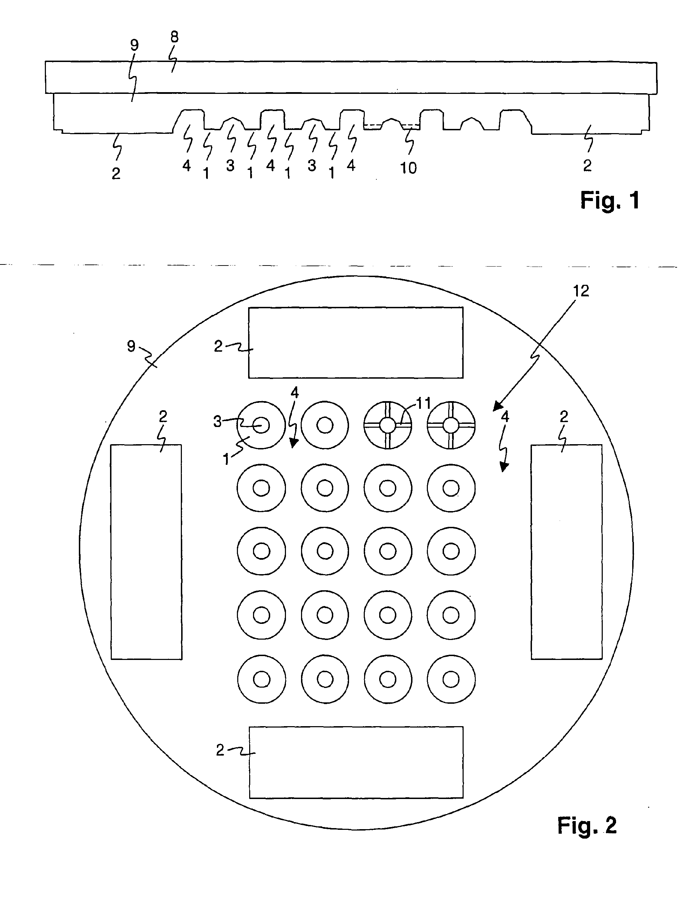

**Figure 1** schematically shows a cross section through a replication tool 9. The tool 9 comprises a plurality of replication sections 3, i.e. negative structural features defining the shape of elements 6 to be created with the tool 9. Each of the replication sections 3 is partially or completely surrounded at its periphery by a first spacer portion (here a local spacer portion or element spacer portion) 1. The area covered by the replication sections 3 and first spacer portions 1 interspersed in this manner is called the replication area. The replication tool may further comprise a rigid back plate 8 to make it dimensionally stiff on a large scale.

The first spacer portion 1 on the one hand serves to define the shape or the boundary of the element 6 in the region close to a substrate body, henceforth simply referred to as substrate 7, and on the other hand to define the height of the element 6 with respect to the substrate 7. That is, the first spacer portion 1 comes to rest against the substrate 7 or at a controllable distance from the substrate 7. The latter distance, called "element spacer height difference", is determined by the vertical extension of second spacer portions 2 relative to that of the first spacer portion 1. The second spacer portions are contact spacer portions protruding further than the first spacer portions and being, during replication, in direct contact with the substrate. In other embodiments of the invention, the local, first spacer portion 1 comes to rest on the substrate 7 without any residual replication material 5 in between, the element spacer height difference being zero, or all spacer portions are at a distance from the substrate, so that the spacer-to-substrate distance is determined by capillary forces and/or surface tension effects or by other means such as by active distance adjusters etc.

In this text, for the sake of convenience, the dimension perpendicular to the surface of the substrate 7, which comprises an essentially flat surface - is denoted as "height". In actual practice, the entire arrangement may also be used in an upside down configuration or also in a configuration where the substrate surface is vertical or at an angle to the horizontal. The according direction perpendicular to the surface is denoted z-direction. The terms "periphery", "lateral" and "sides" relate to a direction perpendicular to the z-direction. The terms "periphery" and "sides" of the element are thus understood when looking at the substrate from a direction perpendicular to the essentially flat substrate. The element covers a part of the substrate, and the surrounding other parts of the substrate, i.e. the region of space adjacent to both the substrate and the functional part of the element, in particular under the first spacer portions, may be covered with the replication material, without interfering with the function of the element.

The replication tool preferably is made of materials with some elasticity, for example PDMS (polydimethylsiloxane) or another elastic material. This results in a conformal thickness control of the element 6 produced, even if the substrate surface, on which the process is executed is not perfectly planar, or if the replication tool is not perfectly planar.

**Figure 2** shows an elevated view of a replication tool. Individual replication sections 3 are shown surrounded by first spacer portions 1. The first spacer portions 1 may each surround the replication section 3 in an unbroken circle, or may comprise spill or overflow channels 10 that make it easier for the replication material 5 to flow into areas or spill volumes 4. A number of separate second, tool-scale, contact spacer portions 2 is arranged around the array of replication sections 3, at the periphery of the tool 9.

The tool 9 is preferably adapted to be used in wafer-scale processing, i.e. the substrate containing the array of replication sections may be disc-shaped. Thus, the diameter of the tool 9 preferably lies in a range from 5 cm to 30 cm. Wafer-scale combination of manufacturing with micro-electronics is possible, as is for example disclosed in WO 2005/083 789 by the same applicant, herewith incorporated by reference.

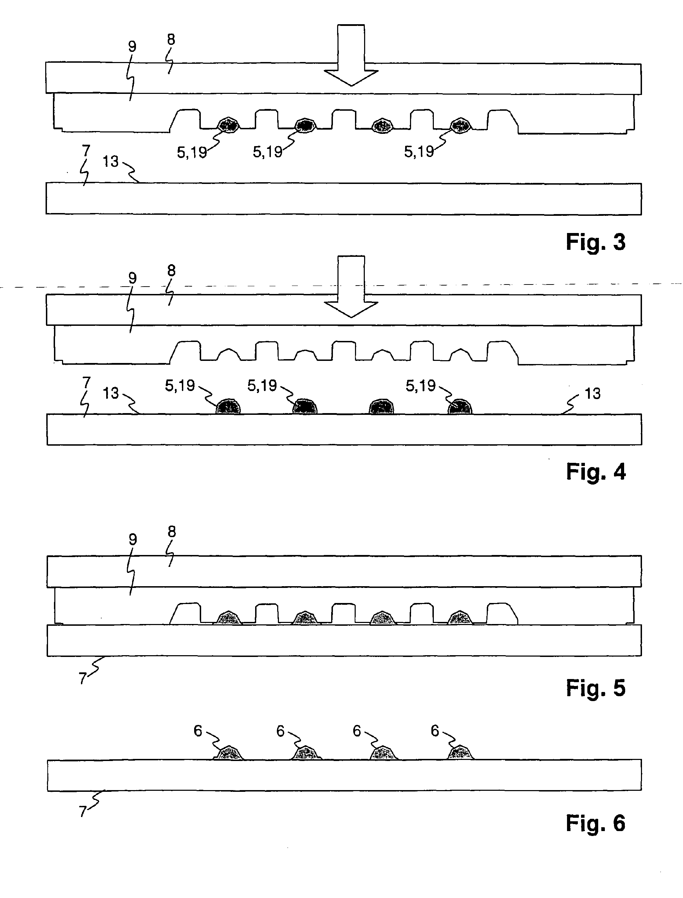

**Figures 3 - 6** schematically show steps of a replication process: In **Figure 3,** the replication material 5-is applied-as individual portions to-the replication sections 3 of the tool 9. For this purpose, the replication material 5 is e.g. applied by an automated dosage means such as a syringe, the tip of which is located manually or with a robot manipulator at the replication section 3, and a droplet 19 or drop of the replication material 5 is extruded into the replication section 3. This may be done with the tool 9 in the position shown in **Figure 3,** i.e. with the face of the tool facing downwards, or alternatively with the face of the tool facing up or, depending on adhesion properties of the replication material on the tool, in any other orientation. The tool 9 is then positioned - face down in the shown embodiment - over the substrate 7 and moved against the substrate 7, as indicated by a block arrow. Alternatively, the if the replication tool is placed with the face facing up, the substrate is placed on top of the replication tool.

In the alternative step of **Figure 4,** the replication material 5 is applied in individual portions or droplets 19 to the substrate 7, at locations corresponding to where the replication sections 3 will meet the substrate 7, and the tool 9 is positioned over the substrate 7. The droplets 19 therefore typically are arranged in a grid-like arrangement corresponding to a mirror image of the pattern of replication sections 3. The tool-scale spacer portions 2 are positioned opposite corresponding tool-scale support areas 13 on the substrate 7. The replication material 5 such as an epoxy is in a plastically deformable or viscous or liquid state. Guiding elements for controlling the relative horizontal displacement and/or the downward movement of the tool 9 may be present, but are not illustrated.

In another preferred embodiment of the invention, the first spacer portions 1 do not surround every replication section 3, but are e.g. separate pillars dispersed over the replication area 12. In this manner, a certain area of the substrate 7 may remain covered with a thicker section of the replication material 5 which is not functional, as compared to the elements 6.

Starting out from either the arrangement of **Figure 3** or that of **Figure 4,** in **Figure 5,** the tool 9 has been moved against the substrate 7. This force driving this movement is preferably only the gravity acting on the tool 9. Thus, the weight of the tool 9, including the back plate 8 and optionally an additional mass, defines the force with which the tool 9 is pressed against the substrate 7. This allows a very precise control of the force, and of any elastic deformation of the tool 9 that may take place. The replication sections 3 are filled with replication material 5, and the remaining replication material 5 has been displaced into the spill volumes 4.

The tool-scale spacer portions 2 touch the substrate 7 without any replication material 5 in between, such that most of the weight of the tool 9 rests on the tool-scale spacer portions 2. The first spacer portions 1 may be separated from the substrate 7 by the element spacer height difference, the resulting volume being filled with replication material 5.

The replication material 5 is then hardened by thermal or UV or chemical curing.

In **Figure 6,** the tool 9 has been removed from the substrate 7, leaving the hardened elements 6 on the substrate 7. Further processing depends on the nature and the function of the elements 6, i.e. the elements 6 may be separated from the substrate 7 or remain on the substrate 7 for further steps in a wafer-scale production process and later dicing into separate units.

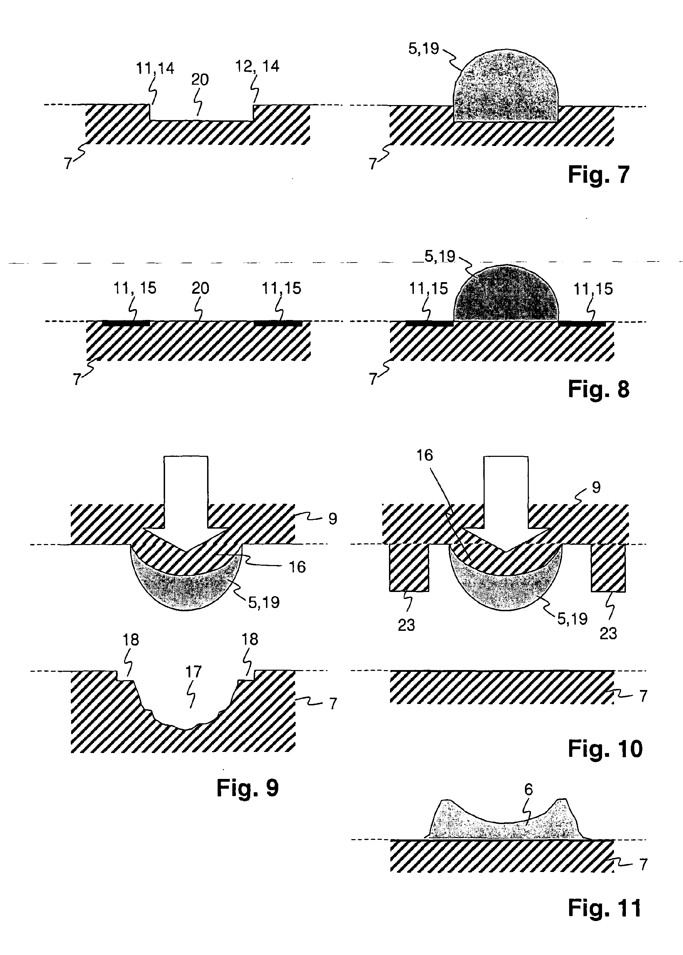

**Figures 7 - 9** show, in schematic cross sections, details of substrates 7 and tools 9 for confining the replication material 5. In a preferred embodiment of the invention, for the case in which the replication liquid 5 is applied to the substrate 7, the substrate 7 comprises a flow stopping or limiting means 11. The flow limiting means 11 prevents the replication liquid 5 from flowing away, which would cause the droplet 19 to flatten. This in turn would jeopardise the desired effect of the droplet 19 filling the replication section 3 while displacing the air in the replication section 3. Such stopping means may be mechanical means such as ridges on or troughs in the substrate 7, or a mechanical or etching treatment that reduces the wetting capability of the substrate 7. Alternatively or in addition, such stopping means may effected by using a different material for the flow stopping section 12 of the substrate 7, or applying a chemical to said section, to reduce the wetting property of the substrate 7.

**Figure 7** shows (left part of figure) a edge 14 of a material receiving area 20, which edge 14 acts as a flow limiting means 11 when a droplet 19 of replication material 5 is applied to the material receiving area 20 (right part of figure). The material receiving area 20 thus forms a hollow or depressed section in the substrate 7. Seen from the top, the edge 14 may be circular, rectangular or any other shape according to the final shape or circumference of the element 6.

**Figure 8** shows (left part of figure) an area of reduced wetting 15 surrounding, on the surface of the substrate 7, a material receiving area 20. The area of reduced wetting 15 acts as a flow limiting means 11 when a droplet 19 of replication material 5 is applied to the material receiving area 20 (right part of figure). The area of reduced wetting 15 stops the replication material 5 from flowing away and thus prevents the droplet 19 from flattening.

**Figure 9** shows a tool 9 and corresponding substrate 7. The replication section 3 of the tool 9 is embodied as a convex replication section 16, i.e. it protrudes from the surrounding surface of the tool 9. Correspondingly, the substrate 7 comprises an opposing concave substrate section 17, into which the convex replication section 16 is moved, with the droplet 19 hanging from the convex replication section 16. As in the inverted case, the convex shape of the droplet 19 fills the concave substrate section 17, replacing the surrounding air. At the outer periphery of the concave substrate section 17, an overflow volume 18 may be arranged, allowing for excess replication-material 5 to spill -out of the-concave substrate section 17. Since the substrate 7 is no longer flat in this embodiment, there is no precise distinction between tool 9 and substrate 7 other than that it may be the tool 9 that is moved, while the substrate 7 remains at rest. The substrate 7 and the tool 9 shall thus also both be referred to as "replication body".

In a preferred embodiment of the invention, the replication material 5 is applied to a plurality of convex replication sections 16 of the tool 9 simultaneously by dipping the tool 9 into the surface of the replication material 5. When drawing out the tool 9, droplets 19 of the replication material 5 will remain hanging from the convex replication section 16. This offers a significant advantage of speed and simplicity over the individual dosing with a syringe.

**Figure 10** shows a similar situation as **Figure 9,** but with the substrate 7 being essentially flat or planar, in particular in a receiving surface area (or multiple surface areas) opposite the convex replication section(s) 16. Preferably, the substrate is a flat, disc-like optical wafer or other overall flat structure. However, as an alternative, said receiving surface area may even comprise irregularities or undefined structures or surface features. In this case, the index of refraction of the substrate may optionally be chosen to be close to that and preferably equal to that of the hardened replication material.

The tool 9 comprises spacers 23 - which may be floating spacers or contact spacers - such that the tool 9 rests on the substrate 7 at a defined distance. The arrangement of Figure 10 is thus similar to that of **Figure 3,** with the difference that the replication sections are convex instead of concave.

**Figure 11** shows the optical element 6 on the substrate 7 after applying the tool 9 to the substrate 7, hardening the replication material 5 and removing the tool 9. The resulting optical element 6 has a concave surface. The height of this surface with respect to-the overall plane-of the substrate is defined by the tool, in particular by the height of the spacer sections 23 with respect to the replication section 16.

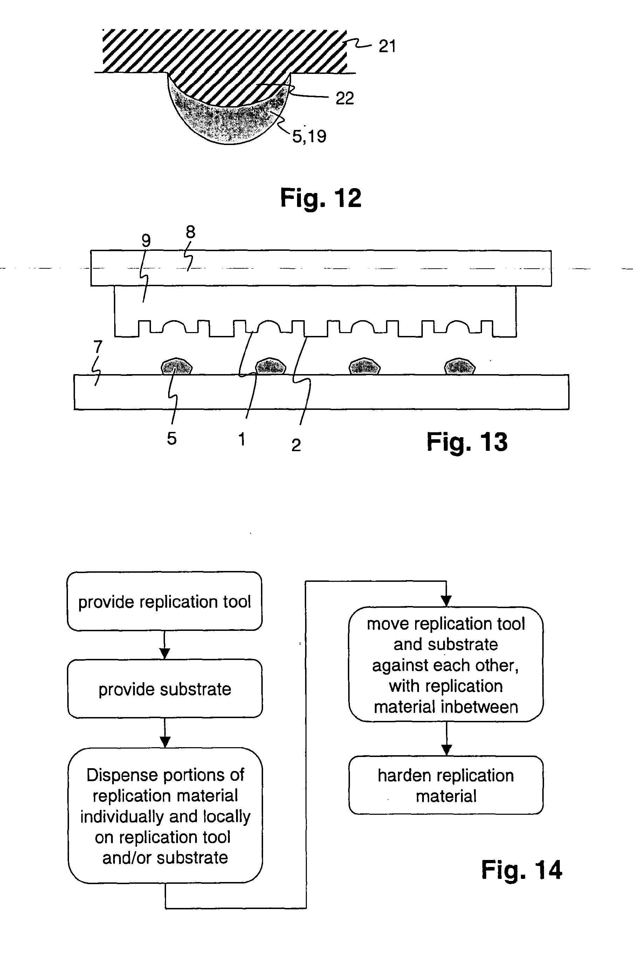

In **Figure 12,** a section of a dispensing tool 21 for dispensing the replication material on the substrate and/or the replication tool is shown. The dispensing tool comprises a plurality of protruding replication material loading portions 22 (only one portion shown), which are arranged in an array corresponding to the array of replication sections of the replication tool. For dispensing, the replication material loading portions are dipped first into the surface of a volume of replication material. The protruding portions are preferably dipped only as far to wet only portions themselves, leaving the rest of the tool surface free from replication material. As a consequence, the replication material loading portions 22 are covered by replication material 5. Then, the dispensing tool is brought into contact with the surface of the replication tool or the substrate, so that amounts of replication material stick to the replication tool or substrate surface, respectively.

**Figure 13** shows, in section a replication tool 9 and a substrate 7. The replication tool shown in **Figure 13** comprises first spacer portions 1 surrounding the replication sections and further comprises second spacer portions 2 distributed over the tool. In the shown example, the replication material 5 is dispensed on the substrate 7. It could also be dispensed to the tool, namely into the cavities which constitute the replication sections.

In **Figure 14,** a flowchart illustrating steps of an embodiment of the invention is shown.

While the invention has been described in present preferred embodiments of the invention, it is distinctly understood that the invention is not limited thereto, but may be otherwise variously embodied and practised within the scope of the claims.

## Claims

1. A method of manufacturing a plurality of optical elements by replication, comprising the steps of
• providing a replication tool that comprises a plurality of replication sections having structural features defining the shape of the elements,
• providing a substrate;
• applying a plurality of individual portions of a replication material in a plastically deformable or viscous or liquid state, each portion being associated with one of the replication sections and the portion being applied to the replication section or to a location on the substrate against which the replication section will be moved, or to both, the replication section and the location on the substrate against which the replication section will be moved;
• moving the tool against the substrate, thereby shaping the replication material according to the shape of the replication sections; and
• hardening the replication material to form the elements.

2. The method of claim 1, wherein the replication tool comprises at least one first spacer portion with a flat surface portion.

3. The method of claim 1 or 2, in which the portions of replication material are applied to the replication sections of the replication tool.

4. The method of claim 3, comprising the step of applying the replication material to the replication sections while the replication sections are facing downwards.

5. The method of claim 3 or 4, wherein the replication sections comprise cavities, and wherein the portions of replication material are dispensed into said cavities.

6. The method of claim 1 or 2, in which the portions of replication material are applied to the substrate.

7. The method of claim 6, comprising the step of limiting the flow of replication material across the substrate by flow limiters on the substrate.

8. The method of any one of the previous claims, wherein the portions of the replication material are applied by means of a dispensing tool which comprises a plurality of replication material loading portions, -and wherein the method previously to applying the replication material comprises the steps of dipping a surface of the dispensing tool into a volume of the replication material and thereby causing replication material to adhere to the replication material loading portions, and of bringing the replication material loading portions into contact with the replication tool or with the substrate thereby transferring replication material to the replication sections or to the substrate, respectively.

9. The method of any one of claims 1-7, wherein at least some of the portions of the replication material are dispensed sequentially by an automated tool.

10. The method of any one of the previous claims, wherein after hardening the replication material the replication tool is removed and sections of the substrate each carrying at least one of said refractive lenses are separated from each other along dicing lines.

11. The method of claim 10, wherein the replication tool comprises spacer portions and wherein said dicing lines are along lateral positions of the substrate where during replication the spacer portions were located.

12. A method of manufacturing a plurality of optical elements, each comprising a refractive lens, by replication, comprising the steps of
• providing a replication tool that comprises a plurality of replication sections having negative structural features defining the shape of the elements, each replication section comprising a dome-shaped portion defining the shape of one of said refractive lenses,
• providing a substrate;
• dispensing a replication material in a liquid or viscous or plastically deformable state into each one of the dome-shaped portions,
• moving the replication tool and the substrate against each other until the replication material is in contact with a surface of the substrate;
• hardening the replication material to form the elements;
• removing the replication tool; and
• separating parts of the substrate each carrying at least one of said refractive lenses from each other.
